# EUROPÄISCHE PATENTSCHRIFT

(11) **EP 3 807 174 B1**
(45) Veröffentlichungstag und Bekanntmachung des Hinweises auf die Patenterteilung: **31.12.2025**
(21) Anmeldenummer: 19731207.7
(22) Anmeldetag: 12.06.2019
(51) Int. Cl.: B65G 1/00, G06Q 10/08, B60P 1/00, B65G 17/20

(54) **SYSTEM UND VERFAHREN ZUM KOMMISSIONIEREN UND AUSLIEFERN VON ARTIKELN EINES ONLINE-SUPERMARKTS**
SYSTEM AND METHOD FOR PICKING AND DELIVERING ARTICLES OF AN ONLINE SUPERMARKET
SYSTEME ET PROCEDE DE CUEILLETTE ET DE LIVRAISON D'ARTICLES D'UN SUPERMARCHÉ EN LIGNE

(30) Priorität: 13.06.2018 DE 102018114177
(43) Veröffentlichungstag der Anmeldung: 21.04.2021
(73) Patentinhaber: SSI Schäfer Automation GmbH (DE), 97232 Giebelstadt (DE)
(72) Erfinder: ISSING, Elmar, 97232 Giebelstadt (DE); HERZMAIER, Christian, 97076 Würzburg (DE); BEER, Jakob, 38667 Bad Harzburg (DE)
(74) Vertreter: Witte, Weller & Partner Patentanwälte mbB
(86) Internationale Anmeldenummer: PCT/EP2019/065289
(87) Internationale Veröffentlichungsnummer: WO 2019/238724

(56) Entgegenhaltungen:
- WO-A1-2010/012364
- WO-A1-2016/122754
- WO-A1-2017/164914
- DE-A1- 102011 015 138
- DE-A1- 102012 018 925
- DE-A1- 102012 019 717
- DE-A1- 102016 009 563
- DE-B3- 102015 118 832
- GB-A- 2 215 699
- US-A1- 2012 298 688
- US-A1- 2015 006 005

## Beschreibung

Die vorliegende Erfindung betrifft ein System und ein Verfahren zum Kommissionieren und Ausliefern von Artikeln gemäß einer Vielzahl von Kunden-Bestellungen, die taschenfähige Artikel eines Online-Lebensmittelhändlers bzw. eines Online-Supermarkts, wie z.B. Obst und Gemüse, Molkereiprodukte, Fleisch und Wurst, (Tief-) Kühlprodukte, Getränke, Drogerieartikel, Elektronikprodukte und/oder Haushaltswaren) aufweisen und die von verschiedenen (End-) Kunden, vorzugsweise online, aufgegeben werden. Diese Kunden-Bestellungen werden nachfolgend auch als Kunden-Aufträge (oder kurz nur als Aufträge) bezeichnet werden. Die Erfindung betrifft ferner ein Lieferfahrzeug.

Die Erfindung betrifft insbesondere sowohl intralogistische als auch allgemein logistische Aspekte. Der intralogistische Aspekt ist in der Zusammenstellung von Artikeln gemäß Kundenaufträgen in einer Lager- und Kommissionieranlage zu sehen. Der allgemein logistische Aspekt ist in der Auslieferung der bereits kommissionierten Artikel von der Lager- und Kommissionieranlage zum Endkunden ("Home Delivery") oder zu Transferstationen (d.h. automatisierte Warenübergabestationen zur Selbstabholung durch den Endkunden, wie z.B. "Tower24") mittels eines Lieferfahrzeugs zu sehen. Die Erfindung kommt insbesondere im Bereich des sog. "E-Grocery" zum Einsatz.

Bereits heute gibt es die Möglichkeit, Artikel eines Supermarkts online zu bestellen und die bestellten Artikel zu einer gewünschten Zeit nach Hause oder alternativ zu einer Transferstation geliefert zu bekommen.

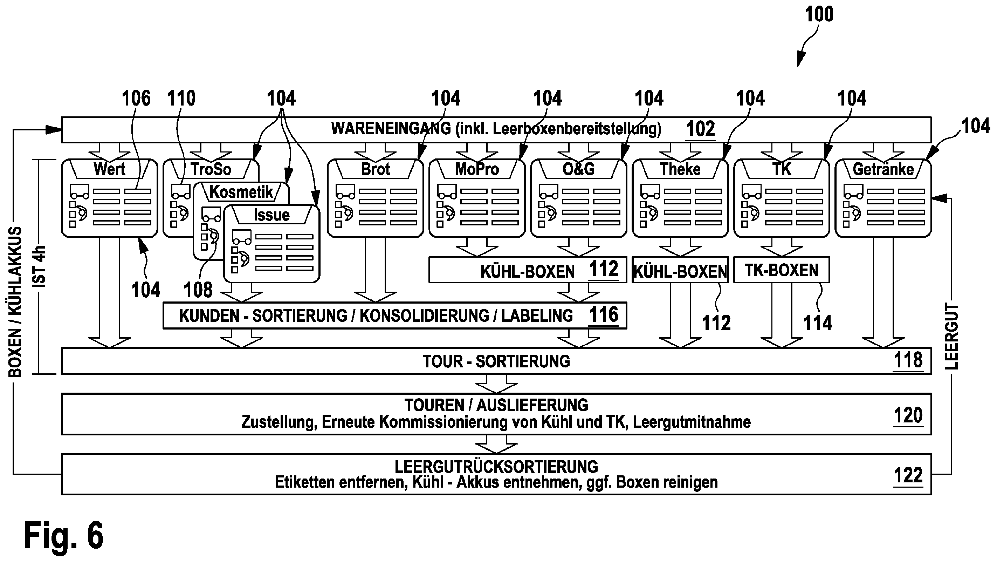

Dabei erfolgt die Kommissionierung (Entnahme aus Lagerstelle und Abgabe an Zielstelle, wie z.B. Auftragsbehälter, der dem bestellenden Kunden zugeordnet ist) in herkömmlichen Lager- und Kommissioniersystemen 100, von denen eines in der Fig. 6 schematisch veranschaulicht ist. Die Kommissionierung und (spätere) Auslieferung, Getränke und Sperrgut ausgenommen, erfolgt durchgängig in Transportkisten.

Die Fig. 6 wird nachfolgend näher beschrieben, um das Umfeld zu verdeutlichen, in welchem sich die vorliegende Erfindung bewegt. In der Fig. 6 sind neben strukturellen Komponenten des herkömmlichen Systems 100 auch funktionale Aspekte veranschaulicht.

Die Artikel des Sortiments des Online-Supermarkts werden in einem Wareneingangsbereich 102 angeliefert und artikeltypabhängig auf verschiedene Lager- und Kommissionierbereiche 104 verteilt, wie es durch helle (vertikale) Pfeile in der Fig. 6 angedeutet ist. Innerhalb der Lager- und Kommissionierbereiche sind exemplarisch Regale 106, Kommissionierer 108 und Kommissionierfahrzeuge 110 angedeutet. Die Bereiche 104 sind artikeltypabhängig (räumlich und funktional) voneinander getrennt.

Typische Bereiche 104 eines Online-Supermarkts sind generell: Wertgegenstände ("Wert" wie z.B. Zigaretten); ein Trockensortiment ("TroSo" wie z.B. Mehl und Zucker); Kosmetik; Issue (z.B. Haushaltswaren); Brot; Molkereiprodukte ("MoPro" wie z.B. Milch, Käse und Ähnliches); Obst und Gemüse ("O&G"), Wurstprodukte ("Theke"); Tiefkühlprodukte ("TK"); und Getränke.

Artikel aus den Bereichen Molkereiprodukte, Obst und Gemüse und Theke werden üblicherweise in gekühlten Kisten bzw. Kühlboxen 112 kommissioniert und transportiert. Artikel aus dem Bereich Tiefkühlprodukte werden in Tiefkühlboxen 114 kommissioniert und transportiert.

Getränke müssen nicht separat kommissioniert werden, da sie üblicherweise direkt in ihrem Ladungsträger (z.B. Getränkekiste) transportiert werden.

Wenn ein Kundenauftrag Artikel aus verschiedenen Bereichen 104 umfasst, wird der entsprechende Auftrag in Teilaufträge (Kisten) aufgeteilt, um in den zugehörigen Bereichen kommissioniert zu werden. Teilaufträge aus den Bereichen Trockensortiment, Kosmetik, Issue, Brot, Molkereiprodukte und Obst und Gemüse werden später in einem Bereich 116 konsolidiert, d.h. zusammengeführt, und nach Kunden sortiert. Danach werden diese Artikel mit den Teilaufträgen aus den restlichen Bereichen 104 in einem (Versand-) Bereich 118 konsolidiert und nach Touren sortiert.

Danach werden die größtenteils fertig kommissionierten Artikel (tourenabhängig) in den Kisten ausgeliefert, wie es in Fig. 6 durch einen Block 120 angedeutet ist. Bei der Auslieferung 120 werden die Artikel an den Endkunden zugestellt, was eventuell eine erneute Kommissionierung bzw. Konsolidierung mit den Artikeln aus den Bereichen 104 für Tiefkühl- und Kühlprodukte verbunden ist. Dies bedeutet, dass der Fahrer des Auslieferungsfahrzeugs (nicht gezeigt) alle Artikel, die nicht gekühlt werden müssen, mit den Artikeln eines Auftrags zusammenbringt, die gekühlt werden müssen. Dies erfolgt zum Zeitpunkt der Entnahme aus dem Fahrzeug, indem die Artikel aus den Kisten in z.B. in eine oder mehrere Tüten umgeladen werden.

Der Block 120 kann auch eine Rücknahme bzw. Mitnahme von Leergut durch den Fahrer umfassen.

Danach erfolgt ein Rücktransport von Leergut, wie z.B. Getränkekisten und den leeren Kommissionier- und Transportkisten. Die Transportkisten müssen dann gereinigt werden. Kühlaggregate müssen entnommen werden, um sie neu zu kühlen. Leere Getränkekisten werden einer Leergutsortierung und dann zum Getränkehersteller zurückgeführt.

Das System 100 weist die folgenden Nachteile auf.

Eine Synchronisierung der verschiedenen vorkommissionierten Teilaufträge aus den unterschiedlichen Bereichen 104 ist schwierig bis unmöglich. Es muss häufig an verschiedenen Stellen mehrfach konsolidiert werden, d.h. unterschiedliche Teilaufträge müssen immer wieder zusammengeführt werden. Eine Verdichtung der kommissionierten Artikel fehlt. Dies bedeutet, dass die Artikel häufig in Transportbehältnissen ausgeliefert werden, die nicht vollständig gefüllt sind.

Die Konsolidierung und Verdichtung der kommissionierten Artikel ist auch in der EP 2 872 424 B1 thematisiert. Dort ist ein System und Verfahren für Betreiber eines Online-Supermarkts offenbart, wo die Kunden ihre Bestellungen direkt an der Lager- und Kommissionieranlage abholen.

Im E-Commerce übliche Änderungen der Kundenbestellungen und Änderungen der Auslieferungstouren sind schwierig zu realisieren. Die Änderung einer Tour bedeutet z.B., dass ein Kunde, der auf einer ersten Tour beliefert werden sollte, von der ersten Tour in eine zweite Tour transferiert werden soll. Dieser Kunde könnte z.B. genau auf der Grenze von zwei Auslieferungsbereichen lokalisiert sein. Eine nachträgliche Touroptimierung könnte zu dem Ergebnis kommen, dass es besser wäre, den Kunden in der zweiten Tour zu beliefern.

Es ist heute schon üblich, (nicht dargestellte) Transportbehälter auf dem Kommissionierfahrzeug 110 durch die Bereiche 104 zu bewegen. Diese Transportbehälter können mit (Kunden-)Tüten bestickt sein, die am Ende der Auslieferung direkt an den Kunden übergeben werden. Nachteilig ist, dass sehr viel Platz in den Transportbehältern verschenkt wird, weil jeder Transportbehälter immer nur Tüten eines einzigen Kunden bevorratet.

Ein weiterer Nachteil dieser Art von Kommissionierung ist darin zu sehen, dass unterschiedliche Transportbehältnisse benutzt werden, was in Umladeprozessen resultiert, die Zeit kosten.

Um eine fehlerfreie Kommissionierung sicherzustellen, werden sowohl die Artikel als auch die eingesetzten Kommissionierelemente, wie z.B. die Kommissionierfahrzeuge 110, sehr häufig mehrfach gescannt.

Die Kommissionierwege (Laufwege) können sehr lang sein.

Dies alles sind Gründe dafür, dass der Kommissioniervorgang relativ ineffizient ist. Dazu trägt auch bei, dass die Transportbehälter mehrfach gekennzeichnet werden müssen (Tour, Kunde, etc.). Die Sortierung nach Kunden und Touren ist arbeitsaufwändig.

Das Umladen der Artikel am Auslieferungsendpunkt durch den Fahrer des Lieferfahrzeugs ist zeitaufwändig, aber unumgänglich, weil Tiefkühlartikel und nicht gekühlte Artikel zusammengebracht werden müssen.

Die DE 10 2012 019717 A1 betrifft eine Fördertechnik-Anlage aus portablen Transport-Modulen.

Die WO 2010/012364 A1 betrifft einen skalierbaren Versandpuffer mit integrierter Sortierfunktion.

Die DE 10 2011 015138 A1 betrifft eine Hängeförder-Transporttasche und ein Verfahren zum automatisierten Entladen der Transporttasche.

Die DE 10 2012 018 925 A1 betrifft eine Tasche für Hängeförderer, eine Beladestation, eine Entladestation und eine Taschen-Hängeförderanlage.

Die DE 10 2015 118832 B3 betrifft ein Lager- und Kommissioniersystem sowie ein Verfahren zum Einlagern von Stückgütern in einen Kommissionier-Automat.

Die GB 2 215 699 A betrifft ein Fördersystem zur Verwendung in einem Behälterkörper.

Die WO 2016/122754 A1 betrifft ein automatisiertes Einladen und Ausladen von Gegenständen.

Die US 2012/298688 A1 betrifft ein Verkaufsroboterwandsystem und ein mobiles Verkaufsfahrzeug.

Die US 2015/006005 A1 betrifft ein autonomes, unbemanntes Straßenfahrzeug für Auslieferungen.

Die WO 2017/164914 A1 betrifft ein verbessertes Frachttransportsystem.

Die DE 10 2016 009563 A1 betrifft ein System und eine mobile Frachtstation zum Verteilen, Ausliefern und Abholen von Fracht.

Daher ist es eine Aufgabe der vorliegenden Erfindung, ein verbessertes System und Verfahren zum Kommissionieren und Ausliefern von Artikeln aus einem Online-Supermarkt vorzusehen.

Diese Aufgabe wird gelöst durch ein Verfahren zum Kommissionieren und Ausliefern von Artikeln gemäß einer Vielzahl von Aufträgen von Kunden, wobei die Aufträge taschenfähige Artikel eines Online-Supermarkts aufweisen, die die Kunden bestellt haben, mit den Schritten: Bereitstellen einer Lager- und Kommissionieranlage, in der die Artikel des Online-Supermarkts in, vorzugsweise unterschiedlichen, Lager- und Kommissionierbereichen gelagert sind; Befüllen von Taschen gemäß den Aufträgen mit den bestellten Artikeln in den Lager- und Kommissionierbereichen; Koppeln der Taschen an einen Hängeförderer; Übergeben der befüllten Taschen an ein Lieferfahrzeug, das eingerichtet ist, die Taschen hängend zu transportieren; Transportieren der hängenden Taschen mit dem Lieferfahrzeug zu den Kunden; Festlegen einer Auslieferungstour mittels einer Steuereinrichtung, wobei die Auslieferungstour eine Reihenfolge definiert, in welcher die Kunden mit dem Lieferfahrzeug angefahren werden, um den Kunden die Taschen mit den Artikeln zu übergeben, die die Kunden bestellt haben; und Sortieren der befüllten Taschen gemäß der Auslieferungstour mit dem Hängeförderer.

Das oben beschriebene Verfahren zeichnet sich dadurch aus, dass die bestellten Artikel so wenig wie möglich berührt werden (One-Touch-Strategie). Dies bedeutet insbesondere, dass die Artikel lediglich beim Befüllen der Taschen tatsächlich angefasst werden. Danach finden vorzugsweise keine Umladeprozesse mehr statt. Dies bedeutet insbesondere ferner, dass weder in der Anlage, noch durch den Fahrer des Lieferfahrzeugs umgeladen wird. Die Artikel befinden sich bereits in den Taschen, die später dann tatsächlich auch an den Kunden ausgehändigt werden. Die Kommissionierung in Kisten und das anschließende Umladen der Artikel in Taschen oder Tüten entfällt.

Der Einsatz von Taschen vereinfacht Sortierprozesse. Einer der Sortierprozesse erfolgt basierend auf der Auslieferungstour. Spätestens bei der Entnahme der Taschen aus dem Lieferfahrzeug durch den Fahrer des Lieferfahrzeugs, sollen die Taschen, die dem aktuellen Kunden zugeordnet sind, als Gruppe bereitstehen. Dies bedeutet, dass der Fahrer nicht alle Taschen im Fahrzeug durchsuchen muss. Die Taschen, die er aktuell braucht, stehen direkt z.B. an einer Entnahmeöffnung des Fahrzeugs bereit. Der erforderliche Sortiervorgang wird spätestens während der Fahrt von der Anlage zum Kunden durchgeführt. Alternativ kann dieser Sortierprozess natürlich auch bereits in der Anlage selbst durchgeführt werden.

Ein weiterer Sortierprozess, der in der Anlage durchgeführt wird, ermöglicht die Zuordnung und Zuteilung der Taschen (und damit auch der Aufträge) auf spezifische Lieferfahrzeuge. Jedem Lieferfahrzeug ist ein Auslieferungsgebiet bzw. eine Auslieferungsroute zugeordnet, in welchem eine Gruppe von bestimmten Kunden ansässig ist. Dies bedeutet mit anderen Worten, dass jedem Lieferfahrzeug eine feste Gruppe von Kunden zugeordnet wird, was eine Verteilung der Taschen innerhalb der Anlage auf die Fahrzeuge erforderlich macht, um die Lieferfahrzeuge entsprechend beladen zu können.

Ein weiterer Vorteil ist in der Konsolidierung zu sehen. Die Taschen können automatisiert mittels des Hängeförderers aus den verschiedenen Lager- und Kommissionierbereichen in einem Sammelbereich zusammengeführt werden, um dort gemäß den oben beschriebenen Sortiervorgängen geordnet zu werden. Gekühlte Waren verbleiben z.B. bis kurz vor der Auslieferung in einem gekühlten Kommissionierbereich.

Sowohl innerhalb der Anlage als auch innerhalb des Lieferfahrzeugs können Sortierungs- und/oder Verdichtungsprozesse durchgeführt werden. Die bestellten Artikel werden vorzugsweise ausschließlich in den hängenden Taschen gehandhabt. Hängende Taschen lassen sich maximal verdichten, indem die Taschen auf Kontakt zusammengeschoben werden. Eine derartige Verdichtung ist z.B. mit konventionellen Behältern nicht möglich. Wenn der Behälter nicht vollständig gefüllt ist, geht beim klassischen Ansatz Raum verloren.

Ferner ist es bevorzugt, wenn der Hängeförderer eine angetriebene Hängefördertechnik innerhalb des Lieferfahrzeugs aufweist, mit welcher der Schritt des Sortierens der befüllten Taschen gemäß der Auslieferungstour durchgeführt wird.

In diesem Fall können die Taschen, die zu einer Auslieferungstour gehören, innerhalb der Anlage chaotisch gehandhabt werden. Insbesondere können die Taschen in einer chaotischen Reihenfolge in das Lieferfahrzeug transferiert werden. Das Lieferfahrzeug ordnet die Taschen entsprechend der Reihenfolge, in der die Kunden angefahren werden. Dies äußert sich in einem Zeitgewinn, weil in der Anlage nicht sortiert werden muss.

Weiter ist es von Vorteil, wenn die Taschen hängend durch die Anlage transportiert werden, während die Taschen mit den Artikeln gemäß den Kundenaufträgen befüllt werden und/oder während die Taschen an das Lieferfahrzeug übergeben werden.

Dies bedeutet mit anderen Worten, dass die Taschen innerhalb der Anlage immer hängend genutzt werden. Die Taschen werden in einem hängenden Zustand befüllt. Die Taschen werden in einem hängenden Zustand an das Lieferfahrzeug übergeben. Dies hat zur Folge, dass die Taschen permanent mit dem Hängeförderer transportiert werden. Der Kommissionierer (Packer) innerhalb der Anlage muss die Taschen nicht tragen. Die Taschen müssen auch nicht zwischen verschiedenen Transportbehältnissen umgeladen werden. Die Taschen können während allen Prozessschritten automatisiert transportiert werden.

Bei einer weiteren besonderen Ausgestaltung erfolgt der Schritt des Koppelns der Taschen an den Hängeförderer erst, wenn die befüllten Taschen an das Lieferfahrzeug übergeben werden.

Diese Ausgestaltung ermöglicht es, existierende Lager- und Kommissionieranlagen, die über keinen Hängeförderer verfügen, gemäß der Erfindung zu betreiben. In diesem Fall können die Taschen z.B. in Transportbehältnissen stehend durch die Anlage bewegt werden, insbesondere um die Artikel in die Taschen zu füllen. Die gefüllten Taschen können dann in dem Transportbehältnis zum Lieferwagen transportiert werden, um dort, automatisiert oder manuell, hängend in das Lieferfahrzeug eingelagert zu werden.

Auch ist es von Vorteil, wie oben erwähnt, wenn die Taschen innerhalb der Anlage ferner für verschiedene Lieferfahrzeuge, denen verschiedene Auslieferungstouren zugeordnet sind, sortiert werden.

Bei einer weiteren bevorzugten Ausgestaltung wird nur ein einziger Typ von Taschen für alle Schritte eingesetzt, wobei der Typ von Taschen vorzugsweise über einen Adapter, insbesondere einen Bügel, eine Schlaufe oder Ähnliches, an den Hängeförderer koppelbar ist.

Diese Ausgestaltung ermöglicht es, (Einweg- oder Mehrweg-) Tüten als Taschen zu benutzen, die dem Kunden später ausgehändigt werden und beim Kunden verbleiben. Es werden also keine hängeförderspezifischen Taschen eingesetzt, sondern konventionelle Tüten, die billig sind und dem Kunden überlassen werden können.

Die oben erwähnte Aufgabe wird ferner durch ein System zum Kommissionieren und Ausliefern von Artikeln gemäß einer Vielzahl von Aufträgen von Kunden gelöst, wobei die Aufträge taschenfähige Artikel eines Online-Supermarkts aufweisen, die die Kunden bestellt haben, und wobei das System aufweist: eine Lager- und Kommissionieranlage, die mindestens einen Lager- und Kommissionierbereich aufweist, wo Taschen gemäß den Aufträgen mit den bestellten Artikeln befüllt werden; einen Hängeförderer zum Sortieren der befüllten Taschen gemäß einer Auslieferungstour; mindestens ein Lieferfahrzeug, das eingerichtet ist, die Taschen hängend zu transportieren; und eine Steuereinrichtung, die eingerichtet ist, die Auslieferungstour festzulegen, wobei die Auslieferungstour eine Reihenfolge definiert, in der die Kunden mit dem Lieferfahrzeug angefahren werden, um den Kunden die Taschen mit den Artikeln zu übergeben, die die Kunden bestellt haben.

Die oben im Zusammenhang mit dem Verfahren erwähnten Vorteile gelten für das System analog.

Vorzugsweise weist der Hängeförderer eine angetriebene, insbesondere in sich geschlossene, Hängefördertechnik, innerhalb des Lieferfahrzeugs auf.

Weiter ist es von Vorteil, wenn der Hängeförderer in der Anlage, insbesondere in dem mindestens einen Lager- und Kommissionierbereich, vorgesehen ist.

In diesem Fall muss der Kommissionierer die Taschen nicht tragen. Beim Befüllen sind die Taschen bereits in den Hängeförderer eingehängt. Dadurch verbessert sich die Ergonomie für den Kommissionierer. Sortier- und/oder Konsolidierungsprozesse können automatisiert werden.

Außerdem können übliche Kommissionierstrategien, wie z.B. das Mann-zur-Ware-Prinzip, optimal angewendet werden. Es kann Batch-orientiert kommissioniert werden.

Auch die spätere Zusammenführung von Taschen, die zum gleichen Auftrag gehören und aus unterschiedlichen Lager- und Kommissionierbereichen kommen, ist einfach und automatisiert. Umladungsprozesse werden vermieden. Sortierprozesse können integriert werden.

Bei einer weiteren besonderen Ausgestaltung weist der Hängeförderer in der Anlage ein fahrerloses Transportsystem mit fahrerlosen Transportfahrzeugen auf, wobei die fahrerlosen Transportfahrzeuge eingerichtet sind, die Taschen hängend zu transportieren.

Existierende Anlagen, die über keinen klassischen z.B. deckengeführten) Hängeförderer verfügen, lassen sich so auf eine einfache Art und Weise nachrüsten. Die Wege und/oder der Raum von existierenden Fördertechniken kann für das fahrerlose Transportsystem genutzt werden, so dass sich die zuvor beschriebenen Vorteile realisieren lassen.

Insbesondere ist der Hängeförderer eingerichtet, die Taschen über Adapter anzukoppeln, wobei die Taschen vorzugsweise Tüten, und insbesondere Einweg-Tüten, sind.

Vorzugsweise sind die Taschen alternativ Mehrweg-Taschen, die vorzugsweise ein integriertes Kühlsystem aufweisen.

Ferner wird ein Lieferfahrzeug vorgeschlagen, das eine angetriebene Hängefördertechnik aufweist und das eingerichtet ist, im oben beschriebenen System betrieben zu werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: ein schematisches Konfigurations- und Ablaufdiagramm für ein System und Verfahren zum Kommissionieren und Ausliefern von Supermarkt-Artikeln, die online bestellt werden;
- Fig. 2: eine schematische Veranschaulichung eines Kommissioniervorgangs, bei dem ein Hängeförderer zum Transport der kommissionierten Artikel innerhalb ein Lager- und Kommissionierbereichs eingesetzt wird;
- Fig. 3: eine schematische Veranschaulichung eines Lieferfahrzeug-Beladevorgangs;
- Fig. 4: zeigt ein Flussdiagramm eines Verfahrens zum Kommissionieren und Ausliefern;
- Fig. 5: eine aufgebrochene Seitenansicht eines Lieferfahrzeugs; und
- Fig. 6: ein Konfigurations- und Ablaufdiagramm für ein herkömmliches System und ein herkömmliches Verfahren zum Kommissionieren und Ausliefern von Supermarkt-Artikeln.

Die vorliegende Erfindung betrifft ein System 10 und ein Verfahren zum Kommissionieren und Ausliefern von Artikeln 14 gemäß einer Vielzahl von Kunden-Bestellungen, die "taschenfähige" Artikel 14 eines Online-Lebensmittelhändlers bzw. eines Online-Supermarkts, wie z.B. Obst und Gemüse, Molkereiprodukte, Fleisch und Wurst, (Tief-) Kühlprodukte, Getränke, Drogerieartikel, und/oder Haushaltswaren) aufweisen und die von verschiedenen (End-)Kunden, vorzugsweise online über das Internet, aufgegeben werden. Diese Kunden-Bestellungen werden nachfolgend auch als Kunden-Aufträge (oder kurz nur als Aufträge) bezeichnet werden.

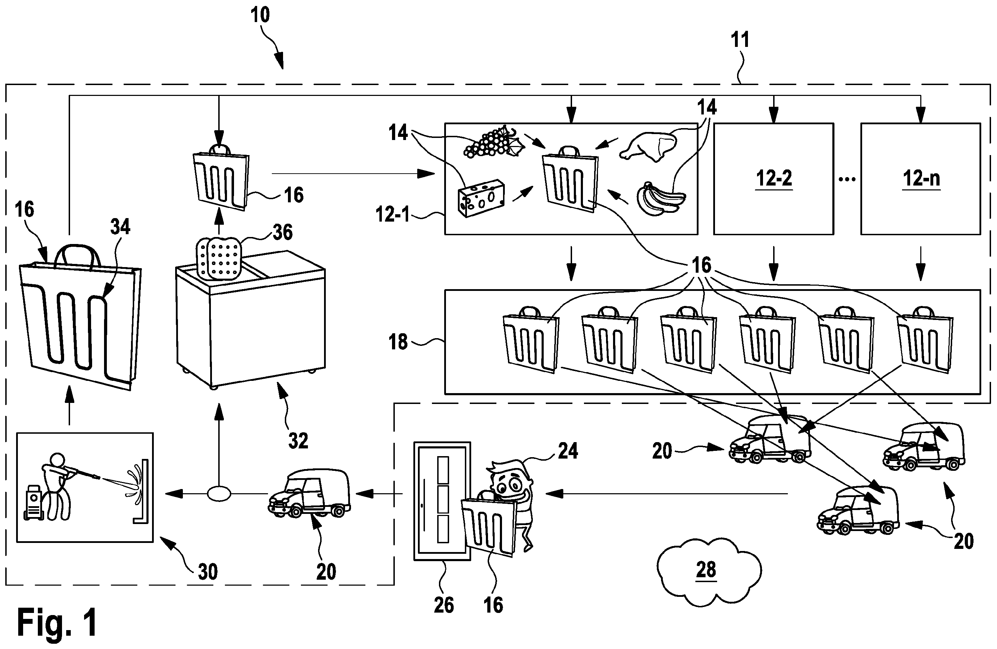

Fig. 1 zeigt ein schematisches Konfigurations- und Ablaufdiagramm zur Verdeutlichung der vorliegenden Erfindung.

Gezeigt ist ein System 10 mit einer Lager- und Kommissionieranlage 11, die nachfolgend auch kurz nur als Anlage 11 bezeichnet werden wird. Die Anlage 11 weist mindestens einen Lager- und Kommissionierbereich 12 auf. Die Lager- und Kommissionierbereiche 12, die zu den Bereichen 104 des System 100 der Fig. 6 ausgebildet sein können, sind üblicherweise getrennt voneinander angeordnet. Die Bereiche 12 können aber direkt aneinandergrenzen.

In der Fig. 1 weist das System 10 exemplarisch n Lager- und Kommissionierbereiche 12 auf, wobei n eine ganze Zahl größer 1 ist. Es versteht sich aber, dass auch nur ein einziger Bereich 12-1 vorgesehen sein kann.

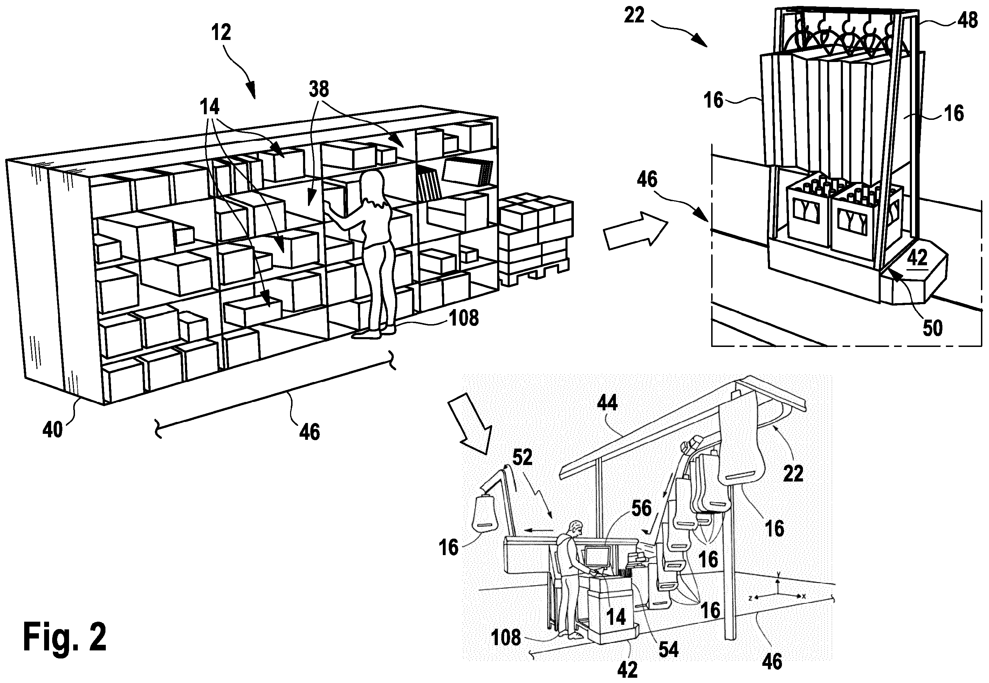

Generell werden alle "taschenfähigen" Artikel 14 in Taschen 16 kommissioniert (vgl. auch Fig. 2), wohingegen nicht taschenfähige Artikel, sofern sie im Artikelsortiment überhaupt vorhanden sind, konventionell kommissioniert werden können.

Der Begriff "taschenfähig" drückt aus, dass die Artikel 14 so dimensioniert sind, dass die Artikel 14 in einer (nicht dargestellten) Tüte oder Tasche 16 gepackt und darin transportiert werden können. Die Tüten bzw. Taschen 16 werden einem Kunden 24 am Ende eines Ausliefervorgangs vorzugsweise direkt, d.h. ohne (erneutes) Umpacken in ein Auslieferungsbehältnis, ausgehändigt. Insbesondere ist die Tasche 16 das Auslieferungsbehältnis selbst, das dem Kunden 24 überreicht wird, wie es unten noch näher erläutert werden wird. Ein beispielhaftes Auslieferungsbehältnis ist eine Tüte, vorzugsweise aus Bioplastik, die z.B. eine maximale Tragkraft von 2 bis 10 kg und eine Größe von 35 x 35 x 4 cm³ bis 50 x 40 x 5 cm³ haben. Alternativ können Papier- oder Stofftüten verwendet werden.

Eine Tüte bzw. Tasche 16 zeichnet sich dadurch aus, dass sie eine sackförmige Aufnahme, die insbesondere nach oben offen ist, und mindestens einen Tragbügel aufweist. Andere Formen, Abmessungen und maximale Tragkräfte sind möglich. Die Tüten und Taschen 16 können mit einem Identifierungsmarker (z.B. RFID-Tag) versehen sein, um sie identifizieren zu können und ein Labelling entfallen zu lassen. Die Taschen 16 können in diesem Fall in der Anlage 11, auf den FTF 42 und innerhalb der Lieferfahrzeuge 20 permanent gelesen und getrackt werden.

Außerdem weisen die taschenfähigen Artikel 14 ein Gewicht auf, das die maximale Traglast des Auslieferungsbehältnisses nicht überschreitet.

Alle Artikel, die nicht taschenfähig sind, wie z.B. Getränkekisten, können aber im System 10 auch gehandhabt werden, wie es nachfolgend noch näher erläutert werden wird.

Das System 10 kann ferner einen optionalen Sortierbereich 18 aufweisen, um die Taschen 16 nach Kunden 24 (Auslieferungstour) und/oder Auslieferungszonen bzw. - gebieten zu sortieren. Nachfolgend wird exemplarisch ausschließlich eine Kundensortierung betrachtet werden. Dazu werden die Aufträge von einer Steuereinrichtung 28 nach den Kundenadressen ausgewertet, um eine möglichst optimale Auslieferungstour, d.h. Reihenfolge der Auslieferungen, zu bestimmen. Die Reihenfolge bestimmt, welcher Kunde aus einer Gruppe von Aufträgen zuerst und welcher Kunde zuletzt beliefert wird. Dementsprechend werden die Kunden 24 dann vom Lieferfahrzeug 20 angefahren.

Bei der Bestimmung einer Auslieferungstour können auch präferierte Lieferzeiten u.Ä. berücksichtigt werden. Weg- und Zeitoptimierungen sind bevorzugt.

Die Kundensortierung kann innerhalb der Anlage 11 und/oder innerhalb der Lieferfahrzeuge 20 erfolgen, wie es nachfolgend noch näher erläutert werden wird. Zonen- bzw. Gebietssortierung erfolgt aber in der Anlage 10, d.h. bevor die Artikel 14 in eines der Lieferfahrzeuge 20 geladen werden, weil die Lieferfahrzeuge 20 immer ein bestimmtes Gebiet mit den Artikeln 14 beliefern.

Ähnlich wie im herkömmlichen System 100 werden die Artikel 14 innerhalb der Anlage 11 vorzugsweise "bereichsorientiert" kommissioniert. Dies bedeutet, dass z.B. Obst und Gemüse in einem ersten Bereich 12-1 kommissioniert wird, wohingegen Zigaretten (Wert) z.B. in einem anderen, zweiten Bereich 12-2 kommissioniert werden. Die Artikel 14 werden beim Kommissionieren aus Lagerstellen entnommen und in die Taschen 16 abgegeben. Auf diese Weise werden die Taschen 16 befüllt.

Es versteht sich, dass in Abhängigkeit von Menge, Dimension und Gewicht der bestellten Artikel 14, die zu einem (einzigen) Auftrag gehören, eine oder mehrere Taschen 16 befüllt werden müssen. Dies bestimmt eine Auftragsverwaltung und -abwicklung vorab und teilt dies dem Kommissionierer 108 mit (Kommissionierführung).

Anschließend werden alle befüllten Taschen 16, die zum gleichen Kunden 24 gehören, sortiert, d.h. zusammengeführt. Die Zusammenführung ist erforderlich, wenn der Auftrag eine Befüllung mehrerer Taschen 14 erfordert oder wenn mehrere Aufträge gleichzeitig innerhalb der Anlage (parallel) abgearbeitet werden.

Üblicherweise wird eine Vielzahl unterschiedlicher Aufträge parallel abgearbeitet werden, so dass eine auftragsorientierte Zusammenführung erforderlich ist. Es versteht sich, dass eine Sortierung überflüssig ist, wenn alle Kundenaufträge in der Anlage 11 sukzessive abgearbeitet würden. Dennoch müssten auch in diesem Fall die Taschen 16, die aus unterschiedlichen Bereichen 12 kommen und die zum gleichen Kunden 24 gehören, zusammengeführt werden.

Außerdem kann es erforderlich sein, dass die Taschen 14, die zum gleichen Kunden 24 gehören, in einer bestimmten (absoluten) Reihenfolge (z.B. schwere Artikel zuerst) ausgeliefert werden. Auch das machte eine Sortierung erforderlich.

Nachdem die Taschen 16, die zum gleichen Kunden 24 gehören, zusammengeführt sind, können diese Taschen 16 an ein Lieferfahrzeug 20 übergeben werden, so dass die Taschen 16, vorzugsweise hängend, im Lieferfahrzeug 20 gelagert sind.

Das Lieferfahrzeug 20 weist für eine hängende Lagerung der Taschen 14 entweder (passive) Pufferschienen (nicht dargestellt) und/oder einen (aktiv angetriebenen, in sich geschlossenen) Hängeförderer 22 auf (vgl. Fig. 2, rechts unten).

Zurückkehrend zur Fig. 1 werden die Taschen 16, sobald die Taschen 16 im Lieferfahrzeug 20 hängen, dann zu den Kunden 24 transportiert. Der Transport erfolgt mit den Lieferfahrzeugen 20 vorzugsweise auf einem direkten Weg, d.h. ohne einen Zwischenstopp in einem weiteren (nicht gezeigten) Verteilzentrum, wo eine finale Tourensortierung stattfinden könnte. Alternativ kann das Lieferfahrzeug 20 auch eine der eingangs erwähnten Transferstationen (hier nicht gezeigt) anfahren, wo die Kunden 24 ihre Bestellungen selbst abholen können.

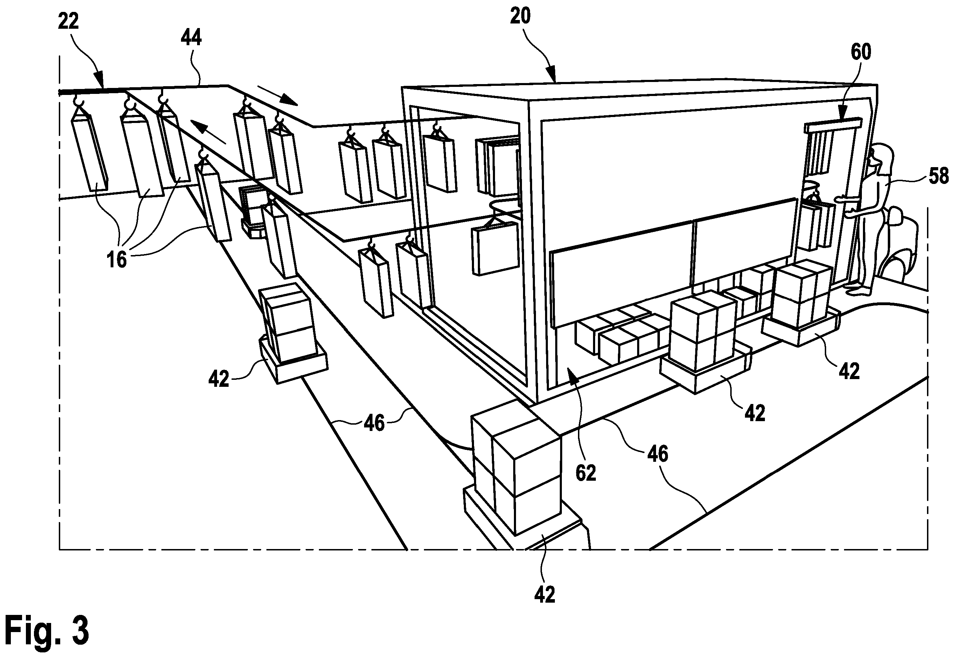

In Fig. 1 erfolgt der Transport der Taschen 16 exemplarisch direkt bis zu einer Haustür 26 der Kunden 24. Der Fahrer 58 (vgl. Fig. 3) des Lieferfahrzeugs 20 entnimmt die Taschen 16 aus dem Lieferfahrzeug 20 und übergibt sie dem Kunden 24 an dessen Haustür 26 ("Home Delivery"). Es geht also insbesondere um einen Online-Handel zwischen einem Lebensmittelhändler und Privatpersonen.

Wie oben bereits erwähnt, wird die Auslieferungstour durch die Steuereinrichtung 28 festgelegt, die in Fig. 1 durch eine Wolke veranschaulicht und Teil des Systems 10 (und/oder der Anlage 11) ist. Die Steuereinrichtung 28 kann durch eine zentrale oder dezentral angeordnete Datenverarbeitungseinrichtung implementiert sein. Die Steuereinrichtung 28 wertet z.B. die Wohnorte der Kunden 24 aus, um die Auslieferungstour zu bestimmen.

Die Steuereinrichtung 28 ist ferner für mindestens eine der nachfolgenden Funktionen eingerichtet: eine Lagerverwaltung; eine Auftragsverwaltung und -abwicklung; und eine Materialflusssteuerung innerhalb der Anlage 11. Die Steuereinrichtung 28 ist durch Hardware und/oder Software implementiert. Die Steuereinrichtung umfasst üblicherweise mindestens eine Datenverarbeitungsanlage.

Teile der Steuereinrichtung 28 bzw. Steuerungssoftware, die zum Sortieren benötigt wird, können auch in dem oder den Lieferfahrzeugen 20 vorgesehen sein. Die Lieferfahrzeuge 20 können alternativ mit eigenen Steuerungen versehen sein.

Zurückkehrend zur Fig. 1 werden die mit den Artikeln 14 gefüllten Taschen 16 gemäß der Auslieferungstour, vorzugsweise mit einem fahrzeuginternen Hängeförderer 22, sortiert. Dies bedeutet, dass der Fahrer 58 des Lieferfahrzeugs 20, sobald er beim Kunden 24 angekommen ist, die Taschen 16 in einer gewünschten Reihenfolge an einer Entnahmeöffnung 60 (vgl. Fig. 3) des Lieferfahrzeugs 20 präsentiert bekommt. Der Fahrer 58 muss diese Taschen 16 dann nur aushängen und dem Kunden 24 übergeben. Der Fahrer 58 muss nicht mehr in das Fahrzeug 58 einsteigen und die Taschen 16 suchen, die dem aktuellen Kunden 24 zugeordnet sind. Der Fahrer 58 muss die Artikel 14 auch nicht mehr umladen. Dies bedeutet beispielsweise, dass die Artikel 14 nicht mehr aus Kisten entnommen und in die Auslieferungstüte, die dem Kunden 24 dann auch tatsächlich übergeben wird, umgepackt werden müssen. Dies gilt auch für (Tief-) Kühlware, wie es unten noch näher ausgeführt werden wird.

Wenn der Fahrer des Lieferfahrzeugs 20 alle Kunden 24 seiner Auslieferungstour beliefert hat, kehrt er zur Anlage 11 zurück. In der Anlage 11 können Taschen 16, die der Kunde 24 ggf. zurückgegeben hat, in einer Reinigungsstation 30 der Anlage 11 gereinigt werden und/oder in einer Kühleinrichtung 32 (z.B. in einem Kühlhaus) gekühlt werden.

Zur Kühlung weisen die Taschen 16 vorzugsweise entweder ein integriertes Kühlsystem 34, das mit einer (nicht dargestellten) Kühlflüssigkeit gefüllt werden kann, oder austauschbare Kühlaggregate 36 auf. Wenn eine Kühlflüssigkeit benutzt wird, können die Taschen 16 auch bedarfsabhängig, vorzugsweise erst unmittelbar vor der Befüllung mit den Artikeln 14, mit neuer Kühlflüssigkeit befüllt werden. In der Fig. 1 sind mäanderförmige Kühlleitungen angedeutet, die in die Taschen 16 integriert sein können.

Es versteht sich, dass sowohl die Reinigungsstation 30 als auch die Kühleinrichtung 32 optionale Komponenten der Anlage 11 darstellen.

Die Fig. 1 verdeutlicht das System 10 und die Abläufe für einen einzigen Betreiber eines Online-Supermarkts. Die gezeigte Systematik lässt sich aber auch auf eine Vielzahl von Betreibern von Online-Supermärkten anwenden, die jeweils eine Vielzahl von Kunden bedienen. Zumindest einige Kunden 24 von einem der Betreiber können auch gleichzeitig Kunden 24 von einem anderen der Betreiber sein.

Die verschiedenen Betreiber betreiben jeweils ihre eigene Lager- und Kommissionieranlage 11 und eine eigene Flotte von Lieferfahrzeugen 20. Die Kommissionierung der Artikel 14 erfolgt wie oben allgemein und nachfolgend speziell beschrieben. Die Art der Auslieferung unterscheidet sich.

Die betreiberspezifischen Lieferfahrzeuge 20 fahren aber nicht direkt zum Kunden 24, sondern liefern die Taschen 16 an ein (nicht gezeigtes) Verteilzentrum. Das Verteilzentrum ist ebenfalls mit einem Hängeförderer 22 (FTF 42 und/oder Hängefördertechnik 44) ausgestattet, um die Taschen 16 automatisiert zu ent- und beladen.

Im Verteilzentrum können die Taschen 16 von verschiedenen Betreibern auf eine gemeinsame (betreiberunabhängige) Auslieferungstour sortiert werden. Diese Sortierung (bzw. Auslieferungstour) basiert vorzugsweise auf einer Wegoptimierung. Möglichst viele Kunden 24 sollen auf möglichst kurzen Weg beliefert werden, und zwar unabhänigig davon, wo eine Kunde 24 bestellt hat.

In diesem Fall kommt es zu Touroptimierungen (z.B. wenige Stopps für viele Kunden 24) und zu Bündelungseffekten. Eine Zustellungszeitdauer lässt sich weiter verkürzen. Die Betreiber können sich die Transportkosten teilen. Die Betreiber können ihre Taschen 16 betreiberspezifisch markieren und von einem "neutralen" Transportunternehmer ausliefern lassen.

Fig. 2 veranschaulicht exemplarisch einen (einzigen) der Lager- und Kommissionierbereiche 12 der Fig. 1. Der in Fig. 2 gezeigte Bereich 12 wird z.B. manuell bedient. Dies bedeutet, dass ein oder mehrere Kommissionierer 108 die Artikel 14 manuell z.B. aus einem Regalfach 38 eines Regals 40 entnehmen und den oder die entnommenen Artikel 14 in eine oder mehrere der Taschen 16 abgeben.

Die Abgabe der Artikel 14 erfolgt vorzugsweise direkt in die Taschen 16, die bereits an einem Hängeförderer 22 hängen, der in der Fig. 2 rechts oben durch ein fahrerloses Transportfahrzeug 42 und in der Fig. 2 rechts unten in Form einer (aktiv angetrieben) Hängefördertechnik 44 implementiert ist. Alternativ können die Artikel 14 aber auch in Taschen 16 gegeben werden, die z.B. in einem (nicht gezeigten) Transportbehältnis, das auf einem Kommissionierfahrzeug 110 (vgl. Fig. 6) positioniert sein kann, stehend oder sitzend angeordnet sind.

Die Kommissionierung erfolgt in Fig. 2 manuell. Die Kommissionierung erfolgt nach dem Mann-zur-Ware-Prinzip, wenn die Artikel 14 an das FTF 42 abgegeben werden, wobei das FTF 42 autonom einem Fahrweg 46 folgt, der z.B. entlang des Regals 40 auf den Boden geklebt sein kann. Das FTF 42 bewegt sich in diesem Fall gemeinsam mit dem Kommissionierer 108 entlang dem Regal 40. Es versteht sich, dass es auch Varianten der FTF 42 gibt, die ohne eine (optisch erkennbare) Fahrspur navigieren können.

Das FTF 42 ist z.B. mit einem Gestell 48 versehen, wo die Taschen 16 eingehängt werden können. Das Gestell 48 ist eingerichtet, mehrere Taschen 16 gleichzeitig hängend zu transportieren. Vorzugsweise werden vorab leere Taschen 16 in das Gestell 48 eingehängt, wobei jeder der eingehängten Taschen 16 später einer der Kundenaufträge (datentechnisch) zugewiesen wird, spätestens wenn ein erster Artikel 14 in die leere Tasche 16 abgegeben wird. Es versteht sich, dass die Taschen 16 generell mit individuell unterscheidbaren Identifizierungsmerkmalen (Barcode, RFID-Tag, etc.) versehen sein können.

Die FTF 42 können ferner eingerichtet sein, nicht taschenfähige Artikel, z.B. in einem unteren Abschnitt der FTF 42, auf einer Transportfläche 50 der FTF 42 zu transportieren. Im rechten oberen Bereich der Fig. 2 sind z.B. zwei Getränkekisten auf der Transportfläche 50 des FTF 42 gezeigt. Die Getränkekisten können gleichzeitig mit den Taschen 16 durch das FTF 42 durch den oder die Bereiche 12 transportiert werden.

Ferner versteht es sich, dass sich die FTF 42, vorzugsweise autonom, durch die gesamte Anlage 11, und insbesondere durch alle Bereich 12, bewegen können.

Der Kommissionierer 108 kann anstatt eines FTF 42 auch leere Taschen 16 mit sich führen, d.h. tragen, in welche er die Artikel 14 auftragsorientiert abgibt. Sobald eine Tasche 16 voll ist, wird die nächste Tasche 16 gefüllt. Später oder sofort nach dem Füllen kann der Kommissionierer 108 die volle Tasche an einen Hängeförderer 22 abgeben.

Es versteht sich, dass der Kommissionierer 108 bei der Mann-zur-Ware-Kommissionierung (rechts oben in Fig. 2) von der Steuereinrichtung 28 auftragsorientiert (und ggf. wegoptimiert) durch den oder die Bereiche 12 geführt wird. Zu diesem Zweck kann der Kommissionierer 108 z.B. mit einem (nicht dargestellten) mobilen Datenterminal oder einem Headset (Kopfhörer und Datenbrille) ausgerüstet sein. Der Kommissionierer 108 kann alternativ mit einer ausgedruckten Kommissionierliste (Einkaufsliste des Kunden 24), die er in Papierform mit sich führt, entlang der Regale 40 durch den Bereich 12 laufen.

Im rechten unteren Bereich der Fig. 2 ist eine Kommissionierung nach dem Prinzip "Ware-zum-Mann" schematisch angedeutet. Insbesondere ist eine Taschen-Beladestation 52 gezeigt. In der Taschen-Beladestation 52 können leere Taschen 16 mittels einer angetriebenen Hängefördertechnik 44 zum Kommissionierer 108 transportiert werden, um dort befüllt zu werden. Der Kommissionierer 108 läuft in diesem Fall nicht durch die Bereiche 12. Gleichzeitig können (synchronisiert) Lagerbehälter 54 über eine gewöhnliche Fördertechnik (Rollenförderer, Bandförderer, Hängeförderer, etc.) oder auch über die FTF 42 zum Kommissionierer 108 transportiert werden. Der Kommissionierer 108 bekommt in diesem Fall z.B. auf einem Bildschirm 56 angezeigt, welchen Artikel 14 er aus dem angedienten Lagerbehälter 54 entnehmen soll. Ferner kann dem Kommissionierer 108 eine Anzahl der zu entnehmenden Artikel 14 angezeigt werden. Vorzugsweise wird immer nur ein einziger Artikel 14 entnommen und in eine einzige Tasche 16 abgegeben. Diese Vorgehensweise erfordert aber einen nachgeschalteten Sortierprozess, wo die - in diesem Fall artikelorientiert - entnommenen (Einzel-) Artikel 14 anschließend auftragsorientiert sortiert werden. Man spricht in diesem Fall von einer zweistufigen Kommissionierung bzw. Batch-Kommissionierung.

Anstatt die Lagerbehälter 54 anzudienen, kann die Beladestation auch genutzt werden, um volle Taschen 16, die wie oben beschrieben gefüllt wurden, an den Hängeförderer 22 bzw. den angetriebenen Förderer 44 zu koppeln, d.h. vorzugsweise dort einzuhängen. Zu diesem Zweck können die (Sammel-) Taschen hängefähig sein, wie es unten noch näher erläutert werden wird.

Alternativ kann die im rechten unteren Bereich der Fig. 2 gezeigte (stationäre) Beladestation 52 auch weggelassen werden. Dies gilt generell für alle Bereiche 12. Die Hängefördertechnik 44 kann durch die Bereiche 12, insbesondere entlang und parallel zu den Regalen 40 verlaufen, so dass der Kommissionierer 108, der in diesem Fall wieder nach dem Mann-zur-Ware-Prinzip kommissioniert, die aus den Regalfächern 38 entnommenen Artikel 14 direkt in eine bereits eingehängte Tasche 16 abgeben kann. Es versteht sich, dass in dieser Konfiguration vorzugsweise auftragsorientiert (d.h. einstufig) kommissioniert wird.

Ferner versteht es sich generell, dass die Kommissionierung nicht zwingend manuell erfolgen muss. Anstatt eines Kommissionierers 108 können auch (nicht gezeigte) Roboter eingesetzt werden, die entweder an einem stationären Ort (analog zur Taschen-Beladestation 52) zum Entnehmen und Umsetzen positioniert sind oder die - ähnlich den FTF 42 - autonom durch die Bereiche 12 bewegbar sind, um zu den Lagerstellen zu kommen. Die Roboter sind eingerichtet, entnommene Artikel 14 direkt an die Taschen 14 abzugeben.

Schließlich versteht es sich, dass sowohl einstufig als auch zweistufig kommissioniert werden kann. Mischformen sind ebenfalls möglich.

Wie oben erwähnt können die Taschen 16 generell durch z.B. Tüten implementiert werden, die z.B. in hängefördertaugliche (nicht gezeigte) Bügel oder Schlaufen (d.h. Adapter) eingespannt sind. Bei den Adaptern kann es sich um sogenannte Roll-Adapter handeln, wie sie exemplarisch in dem Dokument DE 297 09 545 U1 oder DE 297 09 547 U1 gezeigt sind, auf die hier Bezug genommen wird. Diese Roll-Adapter weisen eine Öffnung auf, in die der Bügel eingehängt werden kann, der z.B. eingerichtet ist, die Träger der Tasche 16 bzw. der Tüte so einzuspannen oder einzuhängen, dass die Tasche 16 bzw. Tüte gefüllt werden kann. Die Tüten können den Kunden 24 später direkt ausgehändigt werden, obwohl sie mit dem Hängeförderer 22 (z.B. den FTF 42 oder der Hängefördertechnik 44) automatisiert transportierbar sind.

Alternativ können (Einweg-) Tüten in hängeförderspezifischen Taschen 16 (siehe z.B. DE 10 2011 101 987 A1, DE 10 2011 015 138 A1 oder DE 10 2012 018 925 A1) positioniert werden, wobei die Tüten dann vom Fahrer 58 erst beim Kunden 24 aus den Taschen 16 entnommen und übergeben werden. Die hängeförderspezifischen Taschen 16 werden dem Kunden 24 nicht ausgehändigt.

Wie ebenfalls bereits erwähnt, können die (Einweg-) Tüten auch innerhalb der (nicht dargestellten) Transportbehältnisse durch die Bereiche 12 transportiert werden. In diesem Fall werden die Transportbehältnisse z.B. mit den FTF 42 durch die Anlage 11 und insbesondere durch die Bereiche 12 transportiert. Diese Tüten können zu einem späteren Zeitpunkt an den Hängeförderer 22 gekoppelt werden, indem sie z.B. in entsprechend eingerichtete Bügel eingespannt werden. Das Koppeln der Tüten an den Hängeförderer 22 ist insbesondere in dem Falle erforderlich, wo die Tüten noch sortiert werden müssen.

Fig. 3 zeigt schematisch einen Übergang der Taschen 16 aus der Anlage 11 in eines der Lieferfahrzeuge 20. Exemplarisch ist die angetriebene Hängefördertechnik 44 gezeigt, mit der das Lieferfahrzeug 20 mit hängenden (vollen) Taschen 16 (auftragsorientiert, aber möglicherweise noch unsequenziert) befüllt wird. Leere Taschen 16 können mit der angetriebenen Hängefördertechnik 44 auch aus dem Lieferfahrzeug 20 ausgeladen werden.

Es versteht sich, dass die FTF 42 mit den Gestellen 48 alternativ oder ergänzend zur Beladung eingesetzt werden können. Im Beispiel der Fig. 3 liefern die FTF 42 z.B. nur die nicht-taschenfähigen Artikel, wie z.B. Getränkekisten, zum Lieferfahrzeug 20 und nehmen Leergut auf ihrem Rückweg wieder mit.

Das Lieferfahrzeug 20 ist alternativ oder ergänzend zum angetriebenen Förderer 44 mit (nicht dargestellten, passiven) Schienen versehen. Die Taschen 16 können von dem Hängeförderer 22 der Anlage 11 auf die Schienen aufgeschoben werden. In diesem Fall erfolgt die Bestückung der Schienen vorzugsweise bereits tourenorientiert. Dies bedeutet, dass die Taschen 16 in diesem Fall in der Auslieferungsreihenfolge (FIFO, first in first out) in das Lieferfahrzeug 20 eingeladen werden, wie sie durch einen Fahrer 58 später beim Kunden 24 entladen werden.

Wenn das Lieferfahrzeug 20 ebenfalls mit einer angetriebenen Hängefördertechnik 44 versehen ist, die separat zur Hängefördertechnik 44 der Anlage 11 vorgesehen ist, aber an die Hängefördertechnik 44 des Lieferfahrzeugs 20 koppelbar ist, dann kann die Tourensortierung auch während der Fahrt des Lieferfahrzeugs 20 zum Kunden 24 erfolgen. Selbst während der Fahrt zwischen zwei unterschiedlichen Kunden 24 kann eine Sortierung erfolgen. Die Sortierung erfolgt dann so, dass die Taschen 16 (auftragsorientiert) des nächsten Kunden 24, der gerade angefahren wird, an der Entnahmeöffnung 60 des Lieferfahrzeugs 20 entnehmbar sind.

Es versteht sich, dass die Beladung des Lieferfahrzeugs 20 mit den Taschen 16 alternativ auch manuell erfolgen kann. Die Taschen 16 müssen nicht zwingend mit einem Hängeförderer 22 zur Beladung des Lieferfahrzeugs 20 angedient werden. Die Taschen 16 können z.B. auch in dem oben erwähnten Transportbehältnis zum Lieferfahrzeug 20 transportiert werden, wo der Fahrer 58 die Taschen 16 in die oben erwähnten Schienen und/oder in die angetriebene umlaufende Hängefördertechnik 44 des Lieferfahrzeugs 20 einhängt.

Neben der Entnahmeöffnung 60 für die hängenden Taschen 16 können ein oder mehrere Be/Entladungs-Öffnungen 62 für die nicht-taschenfähigen Artikel vorgesehen sein. Im Beispiel der Fig. 3 sind diese Öffnungen 62 z.B. in einem unteren seitlichen Bereich eines Laderaums des Lieferfahrzeugs 20 angeordnet, so dass die FTF 42 das Lieferfahrzeug 20 vorzugsweise (teil-) automatisiert mit den nicht-taschenfähigen Artikeln be- und entladen können.

Wie oben bereits erwähnt, sind die Taschen 16, die innerhalb der Anlage 11, und ggf. auch in den Lieferfahrzeugen 20, verwendet werden, identisch zu Auslieferungstaschen, die dem Kunden 24 zu dessen freien Verfügung übergeben werden. Dies bedeutet, dass innerhalb des gesamten Systems 10 vorzugsweise nur ein einziger Typ von Taschen 16 zum Einsatz kommt, wobei die Taschen 16 nicht zwingend vom Kunden 24 an den Betreiber des Systems 10 zurückgegeben werden. Diese Auslieferungstaschen sind insbesondere Fördertechnik-fähig. Dies bedeutet, dass die Auslieferungstaschen an existierende Hängeförderer 22 koppelbar sind. Ob die Kopplung direkt, oder indirekt über einen Adapter, erfolgt, ist von untergeordneter Bedeutung.

Von besonderem Vorteil ist es, wenn die Taschen 16 über den gesamten Prozess ausschließlich hängend transportiert werden. Diese Maßnahmen verringert eine Anzahl von Handhabungen, die mit dem Transferieren der Taschen 16 zwischen verschiedenen Transport- und Fördersystemen verbunden sind. Die Artikel 14 werden vorzugsweise nur beim Kommissionieren aktiv "angefasst". Alle anderen Schritte laufen vorzugsweise automatisiert ab.

Die Verwendung einer angetriebenen Hängefördertechnik 44 innerhalb Anlage 11, insbesondere innerhalb der Bereiche 12 und/oder 18, sowie innerhalb der Lieferfahrzeuge 20 ist besonders vorteilhaft. Die Kommissionierer 108 und/oder Fahrer 58 müssen die Artikel 14 weder tragen, noch schieben. Die Kommissionierer 108 können die Artikel 14 direkt in die Taschen 16 kommissionieren.

Die Fahrer 58 müssen die Taschen 16 weder sortieren, noch umladen. Die Fahrer 58 Können die Taschen 16 bereits in der richtigen Reihenfolge aus der Entnahmeöffnung 60 entnehmen, spätestens wenn die Fahrer 58 beim Kunden 24 zu Hause angekommen sind. Sollte keine global verwendbare Tasche 16 eingesetzt werden, kann der Fahrer 58 selbstverständlich die in die Taschen 16 kommissionierten Artikel auch am Ort der Entnahmeöffnung 60 umladen.

Ein weiterer Vorteil ist in einer kühlfähigen Tasche 16 zu sehen. Wie eingangs erwähnt, können die Taschen 16 mit einem integrierten Kühlsystem 34 ausgestattet sein. Das integrierte Kühlsystem 34 kann eine Vielzahl von Leitungen innerhalb der Wand der Tasche 16 umfassen. Durch die Leitungen kann das Kühlmittel geleitet werden, welches an einem entfernten Ort gekühlt wird und gegen Kühlmittel ausgetauscht werden kann, das (warm) in der Tasche 16 enthalten ist.

Ein weiterer Vorteil der Verwendung von Taschen 16 ist darin zu sehen, dass die Taschen 16 bzw. die kommissionierten Artikel 14 verdichtet werden können. Es kann eine höhere Lager- und Transportdichte als mit gewöhnlichen Behältern erzielt werden. Es können z.B. Taschen 16 eingesetzt werden, die unterschiedlich lang ausgebildet sind, so dass sich die Artikel 14 in den befüllten Taschen 16 auf unterschiedlichen Höhen befinden. Auf diese Weise können Räume zur Verdichtung ausgenutzt werden, die nicht zur Verfügung stehen, wenn gewöhnliche Transportbehältnisse (oder Taschen 16 einer einzigen Länge) verwendet werden. Auch kann so verhindert werden, dass sich gekühlte und ungekühlte Artikel 14 berühren.

Der gleiche Vorteil gilt natürlich auch in den Lieferfahrzeugen 20. Die Lieferfahrzeuge 20 sind insbesondere mit einer Hängefördertechnik 44 ausgerüstet, die in mehreren Ebenen übereinander und untereinander angeordnet sind.

Vorzugsweise können die Artikel 14 selbst bereits so konfiguriert sein, dass sie hängefähig sind. Dies bedeutet, dass die Artikel 14 auch direkt - ohne Tasche 16 - an den Hängeförderer 22 koppelbar sein können. Ein Sechserträger Getränkedosen könnte z.B. zusätzlich mit einer Transportöse versehen sein, um den Getränketräger direkt an den Hängeförderer 22 zu koppeln. Der Getränketräger wird dann wie eine Tasche 16 behandelt.

Die Lieferfahrzeuge 20 können extrem schnell be- und entladen werden, wenn Hängeförderer 22 eingesetzt werden. Die Be- und Entladung erfolgt insbesondere automatisiert.

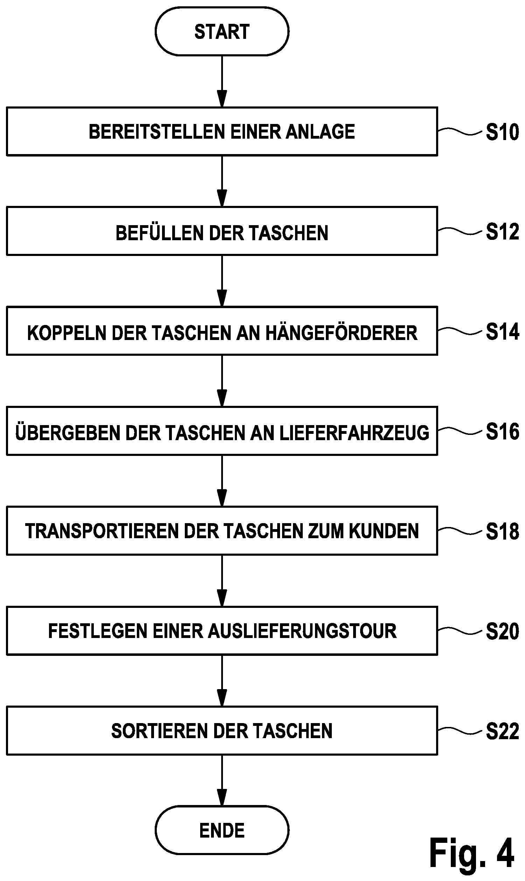

Fig. 4 zeigt ein Flussdiagramm eines Verfahrens zum Kommissionieren und Ausliefern von Artikeln 14 gemäß einer Vielzahl von Aufträgen von Kunden 24, wobei die Aufträge taschenfähige Artikel 14 eines Online-Supermarkts aufweisen, die die Kunden 24 bestellt haben. Die dargestellte Reihenfolge der Schritte ist nicht fest. Die Reihenfolge kann geändert werden und hängt insbesondere davon ab, ob und welche Fördertechnik in einer Anlage 11 eingesetzt wird und auf welche Weise (Mann-zur-Ware, Ware-zum-Mann, einstufig, zweistufig, Batch-Kommissionierung, Pick-by-Light, etc.) in der Anlage 11 kommissioniert wird.

In einem ersten Schritt S10 wird die Lager- und Kommissionieranlage 11 bereitgestellt, in der die Artikel 14 des Online-Supermarkts in, vorzugsweise unterschiedlichen, Lager- und Kommissionierbereichen 12 gelagert sind.

Die Anlage 11 ist wie oben erläutert konfiguriert. Die Bereiche 12 unterscheiden sich insbesondere in den Artikeltypen, die dort gelagert und kommissioniert werden. Zum Beispiel müssen Kühlprodukte bei tieferen Temperaturen als Trockenprodukte gelagert werden. Eine Kühlung ist technisch aufwendig und teurer. Andere Produkte, z.B. Zigaretten, müssen gegen Diebstahl geschützt werden. Wieder andere Produkte müssen gegen unberechtigten Zugriff geschützt werden.

In einem weiteren Schritt S12 werden die Taschen 16 gemäß den Aufträgen mit den bestellten Artikeln 14 in den Lager- und Kommissionierbereichen 12 befüllt. Vorzugsweise hängen die Taschen 16 zu diesem Zeitpunkt bereits an dem Hängeförderer 22, der insbesondere durch alle Bereiche 12 verläuft, so dass die Taschen 16 sukzessive in allen Bereichen 12 befüllt werden können. Die Taschen 16 können aber auch in einem anderen Zustand gefüllt werden, z.B.in einem Behälter sitzend.

In einem Schritt S14 wird die Taschen 16 an einen Hängeförderer 22 gekoppelt. Dies kann vor der Befüllung oder nach der Befüllung geschehen.

Dies kann auch erst bei einer Übergabe an ein Lieferfahrzeug 20 geschehen.

In einem Schritt S16 werden die befüllten Taschen 16 an das Lieferfahrzeug 20 übergeben, das eingerichtet ist, die Taschen 16 hängend zu transportieren.

In einem Schritt S18 werden die hängenden Taschen 16 mit dem Lieferfahrzeug 20 zu den Kunden 24 transportiert.

In einem Schritt S20 wird mittels einer Steuerungseinrichtung 28 eine Auslieferungstour festgelegt, wobei die Auslieferungstour eine Reihenfolge definiert, in welcher die Kunden 24 mit dem Lieferfahrzeug 20 angefahren werden, um den Kunden 24 die Taschen 16 inklusive der Artikel 14 zu übergeben, die die Kunden 24 bestellt haben.

Dieser Schritt kann der erste Schritt überhaupt sein. Die Steuerungseinrichtung kann vorab alle eingegangenen Kundenaufträge nach den Auslieferungsorten (d.h. nach den Wohnorten der Kunden 24) analysieren, um eine z.B. wegoptimierte Auslieferungstour (Navigationsroute) zu bestimmen. In diesem Zusammenhang können auch vom Kunden 24 gewünschte Lieferzeiten und Ähnliches berücksichtigt werden, wobei die Tour dann in dem meisten Fällen nicht mehr wegoptimiert (sondern zeitoptimiert) ist. Die Auslieferungstour legt insbesondere alle nachfolgenden Prozesse (Kommissionierung, Lieferfahrzeug, etc.) fest.

In einem Schritt S22 werden die befüllten Taschen 16 gemäß der Auslieferungsroute mit dem Hängeförderer 22 sortiert.

Diese Sortierung kann in der Anlage 11 und/oder im Lieferfahrzeug stattfinden.

In einem nicht dargestellten Schritt werden die befüllten Taschen dann von einem Fahrer 58 des Fahrzeugs 20 dem Kunden übergeben.

Das Verfahren endet dann.

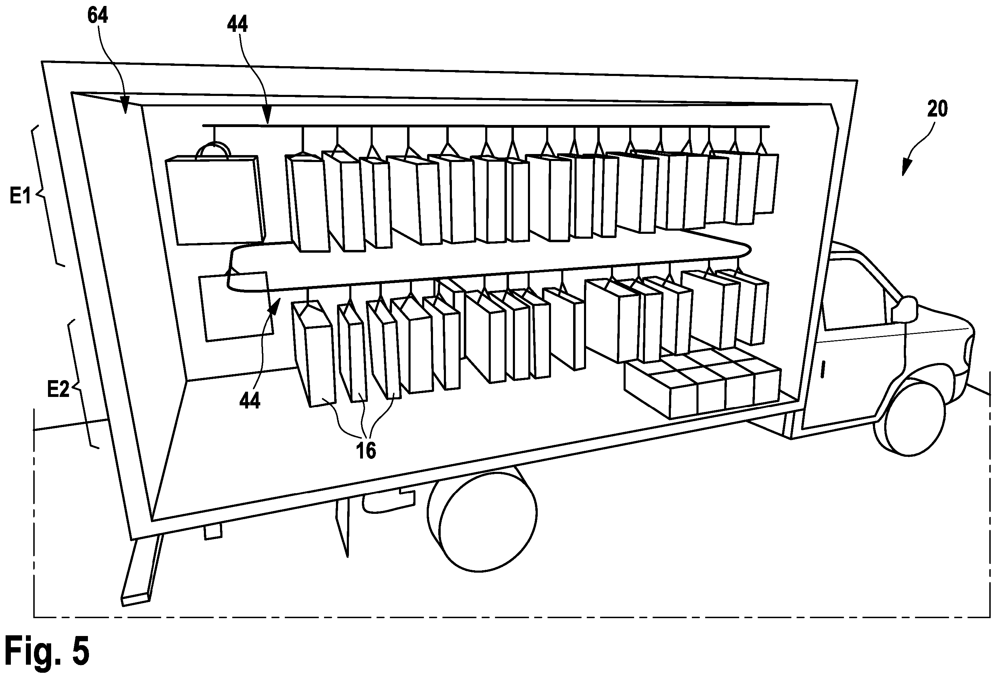

Fig. 5 zeigt eine aufgebrochene Seitenansicht eines exemplarischen Lieferfahrzeugs 20, das eine angetriebene Hängefördertechnik 44 aufweist, die von der Hängefördertechnik 44 der Anlage 11 unabhängig ist. Das Lieferfahrzeug 20 selbst stellt eine eigenständige Erfindung dar.

Innerhalb eines Laderaums 64 des Lieferfahrzeugs sind Mittel zum Aufhängen der (befüllten) Taschen 16 vorgesehen. Die Mittel können durch passive Schienen (nicht dargestellt) und/oder mindestens eine angetriebene Hängefördertechnik 44 realisiert sein.

Die Hängefördertechnik 44 für die Lieferfahrzeuge 20 kann modular in einem Stück in jedes der Fahrzeuge 20 verbracht und dort mechanisch und elektrisch angekoppelt werden. Dies kann ein einmaliger Installationsvorgang sein und/oder als immer wiederkehrender (schneller) Vorgang aufreten, um verschiedene Subunternehmer beschäftigen zu können. Falls gewünscht, können diese Hängefördertechnik-Module auch bereits mit Taschen 16 zur Auslieferung bestückt sein.

In der Fig. 5 sind zwei Hängefördertechniken 44 in unterschiedlichen Ebenen E1 und E2 vorgesehen, um eine Kapazität des Laderaums 64 voll auszunutzen. Jede der Hängefördertechniken 44 ist vorzugsweise in sich geschlossen und kann eine oder mehrere (nicht gezeigte) Nebenstrecken aufweisen, um Sortierprozesse durchführen zu können. Es versteht sich, dass auch nur eine einzige Fördertechnik 44 vorgesehen werden könnte. Alternativ können mehr als zwei Hängefördertechniken 44 vorgesehen werden, insbesondere um räumlich voneinander separtierte, gekühlte und ungekühlte Bereiche innerhalb des Laderaums 64 zu ermöglichen. Vorzugsweise sind die Hängefördertechniken 44 (vertikal) miteinander verbunden, um Taschen 16 miteinander austauschen zu können.

Unterhalb der Ebene E2 ist ausreichend Platz, um nicht taschenfähige Artikel, wie z.B. Getränkekisten, auf dem Boden des Laderaums 64 zu lagern und zu transportieren. Generell kann jeder Raum innerhalb des Laderaums 64 genutzt werden, um nicht taschenfähige Artikel zu lagern und zu transportieren. Nicht taschenfähige Artikel können auch (Post-)Pakete von anderen Zustelldienstleistern sein.

Ferner ist das Lieferfahrzeug 20 mit einer (nicht dargestellten) Schnittstelle versehen, um die Hängefördertechnik 44 der Anlage 11 zur automatischen Befüllung des Fahrzeugs 20 mit den Taschen 16 an die Hängefördertechnik 44 des Fahrzeugs 20 zu koppeln.

Das Lieferfahrzeug 20 ist ferner mit einer (nicht gezeigten) Steuerung versehen, um die Taschen 16, insbesondere während einer Fahrt zu den Kunden 24, automatisiert sortieren zu können.

Der Laderaum 64 des Fahrzeugs 20 könnte auch als separiebarer Container ausgebildet sein, der als mobile (d.h. nicht ortsfeste) temporäre Transferstation genutzt werden kann. Der Container könnte z.B. in Wohngebieten, an Flughäfen, in Parkhäusern, Haltestationen von öffentlichen Verkehrsmitteln und anderen Orten aufgestellt werden, so dass die Kunden 24 ihre Bestellungen an der Entnahmeöffnung 62 (z.B. über einen Code) persönlich abholen können. Die Entnahmeöffnung 62 wäre entsprechend auszubilden (Interaktions-Terminal, Energieversorgung, etc.). In diesem Fall ist die integrierte Hängefördertechnik 44 mit einer Sortierfunktion auszustatten, weil eine Reihenfolge nicht vorhersagbar ist, in der die Kunden 24 ihre Bestellungen abholen.

Nachfolgend werden Vorteile des oben beschriebenen Systems 10 und/oder Verfahrens noch einmal zusammengefasst.

### One-Touch-Strategie:

- direkte Kommissionierung in Ausliefertaschen (in allen Bereichen 12);
- Entfall der Kommissionierfahrzeuge 110;
- Entfall von Transportkisten und damit von Umladeprozessen;
- Entfall eine Vorabbestückung der Transportkisten mit Tüten bzw. Taschen 16;
- Entfall einer Handhabung von leeren Transportbehältern, insbesondere deren Rücknahme; und
- ein reduziertes Labelling.

### Optimierte Kommissionierung:

- Einsatz von FTF 42 in großdimensionierten Bereichen 12 (lange Laufwege für Kommissionierer 108 eliminiert durch Zonen-Kommissionierung, wobei die Bereich 12 in Zonen unterteilt wird, die flexibel bzw. Anforderung von Kommissionierern 108 betrieben werden);
- Erhöhung einer Zufriffsrate für die Kommissionierer 108 und Verkürzung einer Durchlaufzeit;
- optimierte und dynamische Auftragspriorisierung;
- direktes Puffern, Speichern und Sequenzieren in den jeweiligen (Kühl-) Bereichen 12; und
- schonende Artikelhandhabung und Reduktion der Umladeprozesse.

### Nachfüll/Nachliefer-Prozesse:

- (teil-) automatisierter Nachschub (Transport, Bereitstellung, Zuordnung) mittels der FTF 42;
- Führung des Kommissionierers 108 durch tragbares Datenterminal (z-B- Pick-by-Watch); und
effizientes Einräumen der Artikel in Lagervorrichtungen innerhalb der Bereiche 12 inklusive Abfallentsorgung (mittels der FTF42).

### Technik und Logistik:

- Hängeförderer 22 zur Konsolidierung, Pufferung, Speicherung und/oder Sequenzierung bzw. Sortierung (Lieferfahrzeug 20 und/oder Tour);
- Pufferung von bereits kommissionierten gekühlten Artikeln 14 erfolgt direkt in den gekühlten Bereichen 12;
- Identifizierung, Verfolgung (Tracking), Rücksortierung und/oder Dokumentation mittels Identifizierungsmarkern in bzw. an den Taschen 16;
- automatisierte Sortierung nach Lieferfahrzeugen 20 und Auslieferungstouren unmittelbar vor dem Beladen der Fahrzeuge 20;
- sehr schnelle Be- und Entladung der Fahrzeuge 20;
- Einsatz spezieller Taschen 16 (z.B. inklusive Kühlsystem 34, Polsterung, Einlagen, etc.) möglich;
- Entfall einer Kühlakku-Handhabung; und
- signifikante Verbesserung des Volumen-Nutzungsgrades.

### Auslieferung:

- Lieferfahrzeuge 20 zum hängenden Transport der Taschen 16 eingerichtet, so dass Sortierung einfacher wird;
- optimale Raumaufteilung (Taschen 16, Kartons, Getränkekisten, Sperrgut, etc.) im Laderaum 64 möglich;
- Sortierung während der Fahrt möglich;
- für den Fahrer 58 ergonomische Bereitstellung der Artikel 14 beim Kunden 24, so dass sich insbesondere eine Stoppzeit verkürzt; und
- sehr kurze, automatisierte Entladung der Fahrzeuge 20.

### BEZUGSZEICHENLISTE

- 10: System zum Kommissionieren und Ausliefern
- 11: Lager- und Kommissionieranlage
- 12: Lager- und Kommissionierbereich
- 14: Artikel
- 16: Taschen
- 18: Sortierbereich
- 20: Lieferfahrzeug
- 22: Hängeförderer
- 24: Kunde
- 26: Haustür
- 28: Steuereinrichtung
- 30: Reinigungsstation
- 32: Kühleinrichtung
- 34: Kühlsystem
- 36: Kühlaggregat
- 38: Regalfach
- 40: Regal
- 42: Fahrerloses Transportfahrzeug (FTF)
- 44: Hängefördertechnik
- 46: Fahrweg
- 48: Gestell
- 50: Transportfläche
- 52: Taschen-Beladestation
- 54: Lagerbehälter
- 56: Bildschirm
- 58: Fahrer
- 60: Entnahmeöffnung
- 62: Be/Entladeöffnung
- 64: Laderaum
- 100: Lager- und Kommissioniersystem (STDT)
- 102: Wareneingangsbereich
- 104: Lager- und Kommissionierbereich
- 106: Regal
- 108: Kommissionierer
- 110: Kommissionierfahrzeuge
- 112: Kühlboxen
- 114: Tiefkühlbox
- 116: Bereich für Konsolidierung + Sortierung
- 118: Bereich für Tourensortierung

## Patentansprüche

1. Verfahren zum Kommissionieren und Ausliefern von Artikeln (14) gemäß einer Vielzahl von Aufträgen von Kunden (24), wobei die Aufträge taschenfähige Artikel (14) eines Online-Supermarkts aufweisen, die die Kunden (24) bestellt haben, mit den Schritten:
Bereitstellen (S10) einer Lager- und Kommissionieranlage (11), in der die Artikel (14) des Online-Supermarkts in, vorzugsweise unterschiedlichen, Lager- und Kommissionierbereichen (12) gelagert sind;
Befüllen (S12) von Taschen (16) gemäß den Aufträgen mit den bestellten Artikeln (14) in den Lager- und Kommissionierbereichen (12);
Koppeln (S14) der Taschen (16) an einen Hängeförderer (22);
Übergeben (S16) der befüllten Taschen (16) an ein Lieferfahrzeug (20), das eingerichtet ist, die Taschen (16) hängend zu transportieren;
Transportieren (S18) der hängenden Taschen (16) mit dem Lieferfahrzeug (20) zu den Kunden (24);
Festlegen (S20) einer Auslieferungstour mittels einer Steuerungseinrichtung (28), wobei die Auslieferungstour eine Reihenfolge definiert, in welcher die Kunden (24) mit dem Lieferfahrzeug (20) angefahren werden, um den Kunden (24) die Taschen (16) mit den Artikeln (14) zu übergeben, die die Kunden (24) bestellt haben; und
Sortieren (S22) der befüllten Taschen (16) gemäß der Auslieferungsroute mit dem Hängeförderer (22).

2. Verfahren nach Anspruch 1, wobei der Hängeförderer (22) eine angetriebene Hängefördertechnik (44) innerhalb des Lieferfahrzeugs (20) aufweist, mit welcher der Schritt des Sortierens der befüllten Taschen (16) gemäß der Auslieferungsroute durchgeführt wird.

3. Verfahren nach einem der Ansprüche 1 oder 2, wobei die Taschen (16) hängend durch die Anlage (11) transportiert werden, während die Taschen (16) mit den Artikeln (14) gemäß den Kundenaufträgen befüllt werden und während die Taschen (16) an das Lieferfahrzeug übergeben werden.

4. Verfahren nach einem der Ansprüche 1 oder 2, wobei der Schritt des Koppelns der Taschen (16) an den Hängeförderer (22) erst erfolgt, wenn die befüllten Taschen (16) an das Lieferfahrzeug (20) übergeben werden.

5. Verfahren nach einem der Ansprüche 1 bis 4, wobei die Taschen (16) in der Anlage (11) ferner für verschiedene Lieferfahrzeuge (20) mit verschiedenen Auslieferungstouren sortiert werden.

6. Verfahren nach einem der Ansprüche 1 bis 5, wobei nur ein einziger Typ von Taschen (16) für alle Schritte eingesetzt wird, wobei der Typ von Taschen (16) vorzugsweise über einen Adapter, insbesondere einen Bügel, an den Hängeförderer (22) koppelbar ist.

7. Verfahren nach einem der Ansprüche 1 bis 6, wobei die befüllten Taschen (16) mit dem Hängeförderer (22) in der Anlage (11) zusammengeführt werden, so dass alle Taschen (16), die zu der Auslieferungstour gehören, gemeinsam an das Lieferfahrzeug (20) übergebbar sind.

8. Verfahren nach einem der Ansprüche 1 bis 7, wobei das System (10) eine Vielzahl der Lager- und Kommissionieranlagen (11) aufweist, die von unterschiedlichen Betreibern betrieben werden, die vorzugsweise unterschiedliche Kunden (24) bedienen, wobei der Schritt des Transportierens aufweist:
Transportieren der hängenden Taschen (16) von den unterschiedlichen Betreibern mit den Lieferfahrzeugen (20) in ein Verteilzentrum;
Sortieren der Taschen (16) der unterschiedlichen Betreiber im Verteilzentrum nach betreiberunabhänigigen Auslieferungstouren;
Beladen der Lieferfahrzeuge (20) gemäß den betreiberunabhänigigen Auslieferungstouren; und
Transportieren der Taschen (16) mit den Lieferfahrzeugen (20) vom Verteilzentrum direkt zu den Kunden (24) gemäß den betreiberunabhängigen Auslieferungstouren.

9. System (10) zum Kommissionieren und Ausliefern von Artikeln (14) gemäß einer Vielzahl von Aufträgen von Kunden (24), wobei die Aufträge taschenfähige Artikel (14) eines Online-Supermarkts aufweisen, die die Kunden (24) bestellt haben, das aufweist:
eine Lager- und Kommissionieranlage (11), die mindestens einen Lager- und Kommissionierbereich (12) aufweist, wo Taschen (16) gemäß den Aufträgen mit den bestellten Artikeln (14) befüllt werden;
einen Hängeförderer (22) zum Sortieren der befüllten Taschen (16) gemäß einer Auslieferungstour;
mindestens ein Lieferfahrzeug (20), das eingerichtet ist, die Taschen (16) hängend zu transportieren; und
eine Steuereinrichtung (28), die eingerichtet ist, die Auslieferungstour festzulegen, wobei die Auslieferungstour eine Reihenfolge definiert, in der die Kunden (24) mit dem Lieferfahrzeug angefahren werden, um den Kunden (24) die Taschen (16) mit den Artikeln (14) zu übergeben, die die Kunden (24) bestellt haben.

10. System (10) nach Anspruch 9, wobei der Hängeförderer (22) eine angetriebene, vorzugsweise in sich geschlossene, Hängefördertechnik (44) innerhalb des Lieferfahrzeugs (20) aufweist.

11. System (10) nach Anspruch 9 oder 10, wobei der Hängeförderer (22) in der Anlage (11), insbesondere in dem mindestens einen Lager- und Kommissionierbereich (12), vorgesehen ist.

12. System (10) nach Anspruch 11, wobei der Hängeförderer (22) in der Anlage (11) ein fahrerloses Transportsystem mit fahrerlosen Transportfahrzeugen (42) aufweist, wobei die fahrerlosen Transportfahrzeuge (42) eingerichtet sind, die Taschen (16) hängend zu transportieren.

13. System (10) nach einem der Ansprüche 9 bis 12, wobei der Hängeförderer (22) eingerichtet ist, die Taschen (16) über Adapter anzukoppeln, und wobei die Taschen (16) vorzugsweise Tüten und insbesondere Einweg-Tüten sind.

14. System (10) nach einem der Ansprüche 9 bis 12, wobei die Taschen (16) Mehrweg-Taschen sind, die vorzugsweise ein integriertes Kühlsystem (34) aufweisen.

15. Lieferfahrzeug (20), das eine angetriebene Hängefördertechnik (44) aufweist und das eingerichtet ist, im System (10) gemäß den Ansprüchen 9 bis 14 betrieben zu werden.

16. Lieferfahrzeug (20) nach Anspruch 15, das einen separierbaren Laderaum (64) aufweist, der temporär an wechselnden Orten positionierbar ist und der vorzugsweise eingerichtet ist, mit den Kunden (24) zu kommunizieren, um basierend auf einem kundenspezifischen Code, die bestellten Artikel (14) des entsprechenden Kunden (24) an einer Entnahmeöffnung (62) bereitzustellen.

## Claims

1. A method for picking and delivering articles (14) in accordance with a plurality of customer (24) orders, wherein the orders comprise pouchable articles (14) of an online supermarket, which have been ordered by the customers (24), comprising the steps of:
providing (S10) a storage and picking installation (11) in which the articles (14) of the online supermarket are stored in, preferably different, storage and picking areas (12);
filling (S12) pouches (16), according to the orders, with the ordered articles (14) within the storage and picking areas (12);
coupling (S14) the pouches (16) to an overhead conveyor (22);
handing over (S16) the filled pouches (16) to a delivery vehicle (20) configured to transport the pouches (16) in a hanging manner;
transporting (S18) the hanging pouches (16), by means of the delivery vehicle (20), to the customers (24);
determining (S20) a delivery tour by means of a controlling device (28), wherein the delivery tour defines a sequence in which the customers (24) are delivered by the delivery vehicle (20) for handing over to the customers (24) the pouches (16) including the articles (14), which have been ordered by the customers (24); and
sorting (S22) the filled pouches (16) according to the delivery route by means of the overhead conveyor (22).

2. The method of claim 1, wherein the overhead conveyor (22) comprises a driven overhead-conveying system (44) within the delivery vehicle (20) which performs the step of sorting the filled pouches (16) in accordance with the delivery route.

3. The method of any one of claims 1 or 2, wherein the pouches (16) are transported in a hanging manner through the installation (11) while the pouches (16) are filled with the articles (14) in accordance with the customer orders and while the pouches (16) are handed over to the delivery vehicle.

4. The method of any one of claims 1 or 2, wherein the step of coupling the pouches (16) to the overhead conveyor (22) occurs just when the filled pouches (16) are handed over to the delivery vehicle (20).

5. The method of any one of claims 1 to 4, wherein the pouches (16) within the installation (11) are sorted further for different delivery vehicles (20) having different delivery tours.

6. The method of any one of claims 1 to 5, wherein only one single type of pouches (16) is used in all steps, wherein the type of pouches (16) is coupleable preferably via an adapter, particularly via a hanger, to the overhead conveyor (22).

7. The method of any one of claims 1 to 6, wherein the filled pouches (16) are merged with the overhead conveyor (22) in the installation (11) so that all pouches (16) belonging to the delivery tour can be handled over together to the delivery vehicle (20).

8. The method of any one of claims 1 to 7, wherein the system (10) comprises a plurality of storage and picking installation (11) being operated by different operators, who preferably serve different customers (24), wherein the step of transporting comprises:
transporting the hanging pouches (16) from the different operators to a distribution center, by means of the delivery vehicles (20);
sorting the pouches (16) of the different operators in the distribution center according to operator-independent delivery tours;
loading the delivery vehicles (20) in accordance with the operator-independent delivery tours; and
transporting the pouches (16), by means of the delivery vehicles (20), from the distribution center directly to the customers (24) in accordance with the operator-independent delivery tours.

9. A system (10) for picking and delivering articles (14) in accordance with a plurality of orders from customer (24), wherein the orders comprise pouchable articles (14) of an online supermarket, which have been ordered by the customers (24), comprising:
a storage and picking installation (11) comprising at least one storage and picking area (12) where pouches (16) are filled with ordered articles (14) according to the orders;
an overhead conveyor (22) for sorting the filled pouches (16) according to a delivery tour;
at least one delivery vehicle (20) configured to transport the pouches (16) in a hanging manner; and
a controlling device (28) configured to determine the delivery tour, wherein the delivery tour defines a sequence in which the orders from the customers (24) are delivered by the delivery vehicle in order to hand over to the customers (24) the pouches (16) including the articles (14), which have been ordered by the customers (24).

10. The system (10) of claim 9, wherein the overhead conveyor (22) comprises a driven, preferably closed, overhead-conveying system (44) within the delivery vehicle (20).

11. The system (10) of claim 9 or 10, wherein the overhead conveyor (22) is provided in the installation (11), in particular in the at least one storage and picking area (12).

12. The system (10) of claim 11, wherein the overhead conveyor (22) in the installation (11) comprises a driverless transport system including driverless transport vehicles (42), wherein the driverless transport vehicles (42) are configured to transport the pouches (16) in a hanging manner.

13. The system (10) of any one of claims 9 to 12, wherein the overhead conveyor (22) is configured to couple the pouches (16) via adapters, and wherein the pouches (16) preferably are bags, and in particular one-way bags.

14. The system (10) of any one of claims 9 to 12, wherein the pouches (16) are multi-way bags, which preferably comprise an integrated cooling system (34).

15. A delivery vehicle (20) comprising a driven overhead-conveying system (44), and being configured to be operated in the system (10) of any one of claims 9 to 14.

16. The delivery vehicle (20) of claim 15 comprising a storage space (64) which separable, and can be positioned temporarily at different locations, and is preferably configured to communicate with the customers (24) for providing, based on a customer-specific code, the ordered articles (14) of the corresponding customer (24) at a retrieval opening (62).

## Revendications

1. Procédé permettant la préparation de commandes et la livraison d'articles (14) selon une pluralité d'ordres de clients (24), dans lequel les ordres présentent des articles (14) pouvant être mis en sac d'un supermarché en ligne que les clients (24) ont commandés, comportant les étapes consistant à :
mettre à disposition (S10) une installation de stockage et de préparation de commandes (11) dans laquelle les articles (14) du supermarché en ligne sont stockés dans des zones de stockage et de préparation de commandes (12), de préférence différentes ;
remplir (S12) des sacs (16) selon les ordres avec les articles (14) commandés dans les zones de stockage et de préparation de commandes (12) ;
accoupler (S14) les sacs (16) à un moyen de transport suspendu (22) ;
transférer (S16) les sacs (16) remplis à un véhicule de livraison (20) conçu pour transporter les sacs (16) en suspension ;
transporter (S18) les sacs (16) suspendus avec le véhicule de livraison (20) vers les clients (24) ;
établir (S20) un itinéraire de livraison au moyen d'un dispositif de commande (28), dans lequel l'itinéraire de livraison définit un ordre dans lequel les clients (24) sont approchés par le véhicule de livraison (20) afin de transférer aux clients (24) les sacs (16) comportant les articles (14) que les clients (24) ont commandés ; et
trier (S22) les sacs (16) remplis selon l'itinéraire de livraison avec le moyen de transport suspendu (22).

2. Procédé selon la revendication 1, dans lequel le moyen de transport suspendu (22) présente un moyen technique de transport suspendu (44) entraîné à l'intérieur du véhicule de livraison (20) avec lequel l'étape de tri des sacs (16) remplis est mise en œuvre selon l'itinéraire de livraison.

3. Procédé selon l'une des revendications 1 ou 2, dans lequel les sacs (16) sont transportés en suspension à travers l'installation (11) pendant que les sacs (16) sont remplis des articles (14) selon les ordres de clients et pendant que les sacs (16) sont transférés au véhicule de livraison.

4. Procédé selon l'une des revendications 1 ou 2, dans lequel l'étape d'accouplement des sacs (16) au moyen de transport suspendu (22) est effectuée uniquement lorsque les sacs (16) remplis sont transférés au véhicule de livraison (20).

5. Procédé selon l'une des revendications 1 à 4, dans lequel les sacs (16) sont en outre triés dans l'installation (11) pour différents véhicules de livraison (20) comportant différents itinéraires de livraison.

6. Procédé selon l'une des revendications 1 à 5, dans lequel un seul type de sacs (16) est utilisé pour toutes les étapes, dans lequel le type de sacs (16) peut être accouplé au moyen de transport suspendu (22), de préférence par l'intermédiaire d'un adaptateur, en particulier d'une attache.

7. Procédé selon l'une des revendications 1 à 6, dans lequel les sacs (16) remplis sont regroupés dans l'installation (11) avec le moyen de transport suspendu (22) de sorte que tous les sacs (16) appartenant à l'itinéraire de livraison peuvent être transférés ensemble au véhicule de livraison (20).

8. Procédé selon l'une des revendications 1 à 7, dans lequel le système (10) présente une pluralité d'installations de stockage et de préparation de commandes (11) exploitées par différents exploitants qui servent de préférence différents clients (24), dans lequel l'étape de transport présente :
le transport des sacs (16) suspendus des différents exploitants avec les véhicules de livraison (20) vers un centre de distribution ;
le tri des sacs (16) des différents exploitants dans le centre de distribution en fonction d'itinéraires de livraison indépendants des exploitants ;
le chargement des véhicules de livraison (20) selon les itinéraires de livraison indépendants des exploitants ; et
le transport des sacs (16) avec les véhicules de livraison (20) du centre de distribution directement chez les clients (24) selon les itinéraires de livraison indépendants des exploitants.

9. Système (10) permettant la préparation de commandes et la livraison d'articles (14) selon une pluralité d'ordres de clients (24), dans lequel les ordres présentent des articles (14) pouvant être mis en sac d'un supermarché en ligne que les clients (24) ont commandés, présentant :
une installation de stockage et de préparation de commandes (11) présentant au moins une zone de stockage et de préparation de commandes (12) où des sacs (16) sont remplis des articles (14) commandés selon les ordres ;
un moyen de transport suspendu (22) pour le tri des sacs (16) remplis selon un itinéraire de livraison ;
au moins un véhicule de livraison (20) conçu pour transporter les sacs (16) en suspension ; et
un dispositif de commande (28) configuré pour établir l'itinéraire de livraison, dans lequel l'itinéraire de livraison définit un ordre dans lequel les clients (24) sont approchés par le véhicule de livraison afin de transférer aux clients (24) les sacs (16) comportant les articles (14) que les clients (24) ont commandés.

10. Système (10) selon la revendication 9, dans lequel le moyen de transport suspendu (22) présente un moyen technique de transport suspendu (44) entraîné, de préférence fermé sur elle-même, à l'intérieur du véhicule de livraison (20).

11. Système (10) selon la revendication 9 ou 10, dans lequel le moyen de transport suspendu (22) est prévu dans l'installation (11), en particulier dans l'au moins une zone de stockage et de préparation de commandes (12).

12. Système (10) selon la revendication 11, dans lequel le moyen de transport suspendu (22) dans l'installation (11) présente un système de transport sans conducteur comportant des véhicules de transport sans conducteur (42), dans lequel les véhicules de transport sans conducteur (42) sont conçus pour transporter les sacs (16) en suspension.

13. Système (10) selon l'une des revendications 9 à 12, dans lequel le moyen de transport suspendu (22) est conçu pour accoupler les sacs (16) par l'intermédiaire d'adaptateurs, et dans lequel les sacs (16) sont de préférence des sachets et en particulier des sachets à usage unique.

14. Système (10) selon l'une des revendications 9 à 12, dans lequel les sacs (16) sont des sacs réutilisables présentant de préférence un système de refroidissement (34) intégré.

15. Véhicule de livraison (20) présentant un moyen technique de transport suspendu (44) entraîné et conçu pour être exploité dans le système (10) selon les revendications 9 à 14.

16. Véhicule de livraison (20) selon la revendication 15, présentant un espace de chargement (64) séparable qui peut être positionné temporairement à des endroits changeants et qui est de préférence configuré pour communiquer avec les clients (24) afin de fournir, sur la base d'un code spécifique au client, les articles (14) commandés du client (24) correspondant au niveau d'une ouverture de prélèvement (62).
